# EUROPÄISCHE PATENTANMELDUNG

(11) **EP 1 748 227 A1**
(43) Veröffentlichungstag der Anmeldung: **31.01.2007**
(21) Anmeldenummer: 06076420.6
(22) Anmeldetag: 13.07.2006
(51) Int. Cl.: F16H 55/30, F16H 55/14

(54) **Kettenrad, insbesondere zum Umlenken und/oder Antreiben einer Förderkette**

(30) Priorität: 28.07.2005 DE 102005036499
(71) Anmelder: Hauni Maschinenbau AG, 21033 Hamburg (DE)
(72) Erfinder: Wohltmann, Cord, 21465 Wentorf (DE); Eggers, Carsten, 22337 Hamburg (DE); Tagge, Holger, 21033 Hamburg (DE)
(74) Vertreter: Wenzel & Kalkoff

(57) **Zusammenfassung**

Die Erfindung betrifft ein Kettenrad, insbesondere zum Umlenken und/oder Antreiben einer Förderkette (19), umfassend ein rotierend antreibbares Antriebsrad (11), an dessen Umfang mehrere Zähne (13) gleichmäßig über den Umfang unter Bildung einer Zahnteilung verteilt angeordnet sind, wobei die Zähne (13) in Umfangsrichtung relativ zum Antriebsrad (11) bewegbar ausgebildet sind, das sich dadurch auszeichnet, dass den Zähnen (13) ein Element (18) zum aktiven Auslenken in Umfangsrichtung zugeordnet ist.

## Beschreibung

Die Erfindung betrifft ein Kettenrad, insbesondere zum Umlenken und/oder Antreiben einer Förderkette, umfassend ein rotierend antreibbares Antriebsrad, an dessen Umfang mehrere Zähne gleichmäßig über den Umfang unter Bildung einer Zahnteilung verteilt angeordnet sind, wobei die Zähne in Umfangsrichtung relativ zum Antriebsrad bewegbar ausgebildet sind.

Solche Kettenräder dienen insbesondere für den Antrieb eines insbesondere endlosen Kettensystems, wie es in diversen Fördereinrichtungen oder Speichereinrichtungen insbesondere auch in der Tabak verarbeitenden Industrie zum Einsatz kommt. Dabei ist jedes Kettenrad, unabhängig davon, ob es sich um ein Antriebsrad oder ein Umlenkrad handelt, auf eine definierte Kettenteilung ausgelegt.

Die Teilung eines anzutreibenden Elementes, insbesondere einer Förderkette, ist jedoch aus verschiedenen Gründen veränderlich. Beispielsweise kann ein Kettenteilungsfehler durch Verschleiß der Förderkette oder sogenanntes Werkstoffkriechen, das insbesondere bei Kunststoffketten auftritt, entstehen. Als Folge eines zunehmenden Kettenteilungsfehlers werden die Eingriffsverhältnisse zwischen der Förderkette mit der veränderten Kettenteilung einerseits und dem Kettenrad mit der starren Zahnteilung andererseits gestört. Dies führt dazu, dass die Förderkette mit zunehmendem Kettenteilungsfehler immer höher am Kettenrad aufläuft, bis es schließlich zum sogenannten Kettensprung oder auch Zahnübersprung kommt. Mit anderen Worten entfernen sich die Kettenglieder der Förderkette beim Eingriff in das Kettenrad immer weiter vom Zahngrund, bis die Förderkette quasi "durchrutscht". Da die bisher bekannten Kettenräder jeweils ausschließlich auf eine definierte Zahnteilung festgelegt sind, erfordern die beschriebenen Kettenteilungsfehler eine Angleichung der Zahnteilung an die veränderte Kettenteilung. Dies kann nur durch Austausch der Kettenräder mit veränderter Zahnteilung erfolgen. Dies bedeutet jedoch zusätzlichen Aufwand. Des weiteren muss die Förder- oder Speichereinrichtung zu den Wechselzwecken stillgelegt werden. Ein weiterer Nachteil besteht darin, den idealen Zeitpunkt zum Wechseln des Kettenrades zu bestimmen.

Neben diesen üblicherweise die gesamte Kette betreffenden Teilungsveränderungen können auch Einzelteilungsfehler auftreten. Solche Einzelteilungsfehler ergeben sich beispielsweise durch Fertigungsschwankungen bei der Herstellung der Kettenglieder oder durch den Austausch einzelner Kettenglieder. Bei solchen Einzelteilungsfehlern führt auch der Austausch der Kettenräder zu keinem besseren Ergebnis. Vielmehr können die genannten Fehler stets zu einem Zahnübersprung oder dem vollständigen Durchrutschen der Kette führen, ohne eine wirksame Eingriffsmöglichkeit oder Abhilfemaßnahme zu haben.

Des weiteren ergeben sich insbesondere bei Kunststoffketten weitere Teilungsfehler, die vor allem auf die Elastizität der Kette zurückzuführen sind. Die unterschiedlichen Zugkräfte vor und hinter dem Kettenrad führen bei einer Kette mit einem niedrigen E-Modul (elastische Kette) zu einer Teilungsveränderung während des Umlaufs der Kette um das Kettenrad. Auch für solche Fälle bestehen bisher ebenfalls keine Eingriffsmöglichkeiten oder Abhilfemaßnahmen.

Aus den genannten Problemen ergibt sich somit die Notwendigkeit für Anpassungsmöglichkeiten der Kettenräder an auftretende Teilungsfehler der Kette. Es sind unterschiedliche Möglichkeiten für solche Anpassungen bekannt. Aus der DE 40 04 757 A1 ist beispielsweise eine Anpassung der Zahnteilung an eine veränderliche Kettenteilung durch eine biegeelastische Ausbildung der Zähne in Umfangsrichtung bekannt. Das Kettenrad ist in Umfangs- und Rotationsrichtung in mehrere Körperabschnitte gegliedert, indem zwischen den einzelnen Zähnen Trennfugen eingefügt bzw. ausgebildet sind. Dabei werden die einzelnen Zähne von der einlaufende Kette ausgelenkt und an die entsprechende Kettenteilung angepasst. Mit anderen Worten läuft die Kette an den Zahnflanken auf die Zähne auf, wodurch das Problem des Zahnübersprungs und/oder des vollständigen Durchrutschens weiterhin besteht. Das bekannte Kettenrad weist des weiteren den Nachteil auf, dass ausschließlich eine passive Anpassung innerhalb eines sehr kleinen Bereiches erfolgen kann. Dadurch rutscht die Kette über die Zahnflanken in den Zahngrund, was zu einer erhöhten Belastung der Zähne und zu einem Verschleiß von Kette und Kettenrad führt.

Es ist daher Aufgabe der vorliegenden Erfindung, ein verschleißarmes Kettenrad mit veränderbarer Teilung vorzuschlagen, das einen Zahnübersprung und ein Durchrutschen der Kette wirksam verhindert.

Diese Aufgabe wird durch ein Kettenrad der eingangs genannten Art dadurch gelöst, dass den Zähnen ein Element zum aktiven Auslenken in Umfangsrichtung zugeordnet ist. Mit dieser erfindungsgemäßen Ausbildung können alle Teilungsfehler, nämlich insbesondere sowohl sämtliche Einzelteilungsfehler als auch Teilungsfehler der gesamten Kette in einem bestimmten Toleranzbereich, der gegenüber starren Kettenrädern deutlich vergrößert ist, automatisch ausgeglichen werden. Die Möglichkeit der aktiven Auslenkung stellt sicher, dass jeder Zahn in einer optimalen Position zur Kette, und zwar unabhängig von deren Kettenteilung, steht, so dass ein Eingriff bis zum Zahngrund gewährleistet ist. Mit der aktiven Auslenkung einzelner Zähne zur Kette wird neben der Anpassung der Zahnteilung an die jeweils aktuelle Kettenteilung des weiteren eine verbesserte Verteilung des Antriebsmoments auf die einzelnen Zähne erreicht.

Vorzugsweise ist das Element zur Zwangsauslenkung der Zähne ausgebildet. Dadurch ist sichergestellt, dass die Zähne beim Eingriff in die Kette in der optimalen Position stehen. Das erfindungsgemäße System weist dadurch eine geringe Relativbewegung zwischen Kette und Kettenrad auf, und zwar bei hoher Kontaktpressung, da die Kette bzw. deren Kettenglieder durch die Zwangsauslenkung direkt in den Zahngrund gelegt werden. Anders ausgedrückt werden Relativbewegungen bei hoher Kontaktpressung vermieden. Dadurch wird entsprechend auch der Abriebverschleiß reduziert.

In einer bevorzugten Ausführungsform der Erfindung ist das Element ein Stiftrad, das exzentrisch zum Antriebsrad angeordnet ist. Durch die Exzentrizität ist eine konstruktiv einfache und individuell einstellbare Möglichkeit der Zwangsauslenkung realisiert. Dadurch, das die Kette bzw. die Kettenglieder mittels der Zwangsauslenkung direkt im Zahngrund aufgenommen werden, und zwar unabhängig von der Kettenteilung, verteilen sich die Zahnkräfte auf zwei Kontaktflächen, nämlich den Zahngrund und die nachlaufende Zahnflanke.

Vorteilhafterweise sind dem Stiftrad (Auslenk-)Stifte zur Auslenkung der Zähne zugeordnet, wobei die Anzahl der Stifte der Anzahl der Zähne entspricht. Mit dieser Ausbildung wird die Auslenkung auf besonders einfache und zuverlässige Art gewährleistet. Dadurch, dass jeder Zahn individuell auslenkbar ist, kann eine Fehlstelle, also beispielsweise ein Einzelteilungsfehler in einem Umlauf der Kette um das Kettenrad problemlos integriert werden.

Eine bevorzugte Weiterbildung der Erfindung ist dadurch gekennzeichnet, dass die Auslenkstifte wahlweise drehbar am Stiftrad gelagert oder jeweils mit einer drehbaren Hülse oder dergleichen versehen sind. Dadurch kann die Reibung noch weiter reduziert werden.

Vorteilhaft zur weiteren Verschleißreduzierung ist jeder Stift exzentrisch an einer Stiftaufnahme angeordnet, wobei jede Stiftaufnahme auf einem am Stiftrad befestigten Zapfen drehbar gelagert ist.

Eine vorteilhafte Ausführungsform sieht vor, dass die Zähne über Zahnarme am Antriebsrad befestigt sind. Mittels der Zahnarme ist eine Bewegbarkeit der Zähne in Umfangsrichtung auf vorteilhafte Weise ermöglicht.

Vorteilhafterweise sind die Zahnarme gekröpft ausgebildet. Durch die Kröpfung der Anlagefläche kann der Gleitweg des Stifts an den Zahnflanken, also dem Zahnsegment reduziert werden, da die Auslenkung nur im Bereich des Einlaufens der Kette auf das Kettenrad erforderlich ist. Mit anderen Worten ist der Kontaktbereich zwischen dem Stift und dem Zahnarm sehr klein, wodurch der Verschleißbereich und die maximale Kontaktkraft reduziert sind.

Weitere vorteilhafte und/oder bevorzugte Merkmale und Ausführungsformen ergeben sich aus den Unteransprüchen und der Beschreibung. Besonders bevorzugte Ausführungsforrnen werden anhand der beigefügten Zeichnung näher erläutert. In der Zeichnung zeigt:
- Fig. 1: ein Kettenrad, das aus einem Antriebsrad und einem Stiftrad gebildet ist, mit einem Kettenabschnitt,
- Fig. 2: eine Schnittdarstellung II-II durch das Kettenrad gemäß Figur 1,
- Fig. 3: eine schematische Darstellung einer mechanischen Kopplung von Antriebsrad und Stiftrad,
- Fig. 4: ein einzelner Zahn mit gekröpftem Zahnarm,
- Fig. 5: eine weitere Ausführungsform und Anordnung eines Zahnes, und
- Fig. 6: eine Schnittdarstellung durch die Anordnung gemäß Figur 5.

Die gezeigten und beschriebenen Kettenräder dienen insbesondere zum Umlenken und/oder Antreiben von Förderketten. Sie sind jedoch ebenfalls für Förderbänder oder dergleichen einsetzbar.

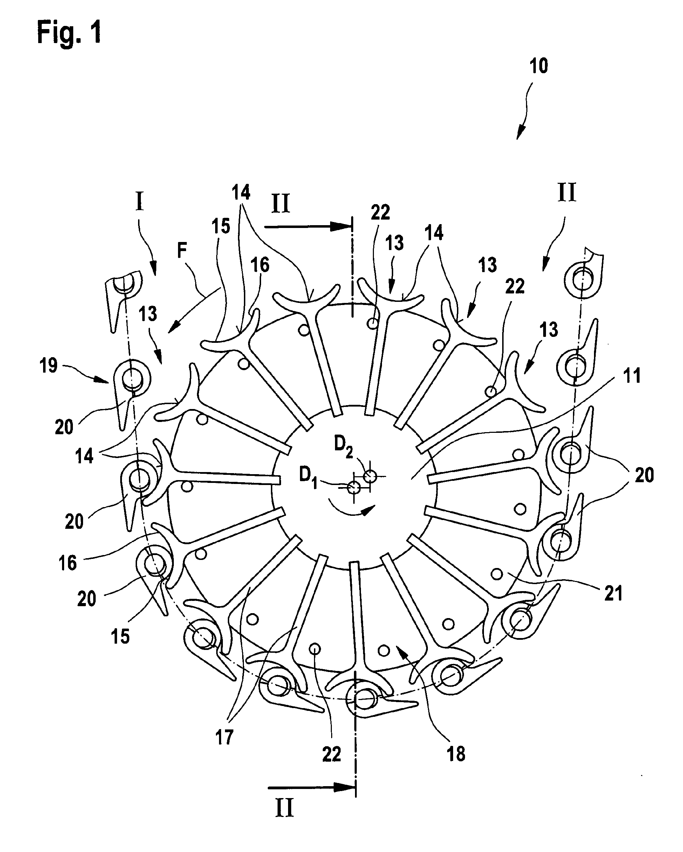

Das in der Figur 1 dargestellte Kettenrad 10 umfasst ein Antriebsrad 11, das auf einer Welle 12 angeordnet ist. Mittels der Welle 12 oder anderen bekannten Antriebsmitteln ist das Antriebsrad 11 rotierend antreibbar. Am Umfang des Antriebsrades 11 sind mehrere Zahnelemente bzw. Zähne 13 angeordnet. Die Zähne 13 sind gleichmäßig über den Umfang verteilt. Durch den Abstand der Zähne 13 wird eine Zahnteilung definiert. Jeder Zahn 13 weist einen Zahngrund 14 sowie Zahnflanken 15, 16 auf. Dabei ist die in Haupttransportrichtung F vorauslaufende Zahnflanke jeweils mit dem Bezugszeichen 15 und die nachlaufende Zahnflanke jeweils mit dem Bezugszeichen 16 versehen.

Die Zähne 13 sind am Antriebsrad 11 angeordnet. Zur Verbindung der Zähne 13 mit dem Antriebsrad 11 ist jedem Zahn 13 ein Zahnarm 17 zugeordnet. An einem Ende des Zahnarms 17 ist der Zahn 13 angeordnet. Mit dem entgegengesetzten Ende ist der Zahnarm 17 am Antriebsrad 11 befestigt. Den Zähnen 13 ist ein Element 18 zum aktiven Auslenken derselben zugeordnet. Das Element 18 ist zur Zwangsauslenkung der Zähne 13 ausgebildet. Je nach Ausbildung und Anordnung des Elementes 18 wirkt sich die Zwangsauslenkung im Einlaufbereich I und/oder im Auslaufbereich II einer Förderkette 19, die aus mehreren Kettengliedern 20 gebildet ist, aus.

Jeder Zahn 13 ist unabhängig voneinander und relativ zum Antriebsrad 11, an dem er befestigt ist, bewegbar ausgebildet. Die Bewegbarkeit kann auf unterschiedliche Weise realisiert sein. Ein Beispiel besteht darin, dass der Zahn 13 mit dem Zahnarm 17 mindestens teilweise biegeelastisch ausgebildet ist. Bevorzugt ist der Zahnarm 17 biegeelastisch ausgebildet. Eine weitere Möglichkeit besteht darin, die Zahnarme 17 (in und entgegen der Haupttransportrichtung F) gelenkig z.B. mit einer Federrückstellung oder dergleichen am Antriebsrad 11 anzuordnen. Die gelenkige Anordnung kann auch mit der biegeelastischen Ausbildung kombiniert werden. In weiteren Ausführungsformen können die Zähne 13 bzw. Zahnarme 17 als Biegefedern oder dergleichen ausgebildet sein.

Das Element 18 zum aktiven Auslenken der Zähne 13 ist als Stiftrad 21 ausgebildet. Das Stiftrad 21 weist einen größeren Durchmesser auf als das Antriebsrad 11 und ist exzentrisch zu diesem angeordnet. Die Drehpunkte D₁ und D₂ sind versetzt zueinander angeordnet. Der Versatz erstreckt sich in zwei Richtungen. Anders ausgedrückt weisen die Drehpunkte D₁ und D₂ in horizontaler und vertikaler Richtung (siehe Figur 1) einen Abstand auf. Diese Exzentrizität E zwischen Antriebsrad 11 und Stiftrad 21 ist einstellbar.

Dem Stiftrad 21 sind mehrere (Auslenk-)Stifte 22 zugeordnet. Die Anzahl der Stifte 22 entspricht üblicherweise der Anzahl der Zähne 13 bzw. der Zahnarme 17, kann jedoch davon abweichen. Die Stifte 22 sind radial angeordnet und weisen einen Radius auf, der größer als der äußere Radius des Antriebsrades 11 ist. Vom äußeren Rand des Stiftrades 21 können die Stifte 22 einen Abstand aufweisen. Die Stifte 22 können fest am Stiftrad 21 angeordnet sein. Alternativ können die Stifte 22 auch drehbar am Stiftrad 21 gelagert oder mit einer drehbaren Hülse oder dergleichen versehen sein.

Die Stifte 22 verteilen sich gleichmäßig um das Antriebsrad 1 1 herum und sind mit den Zahnarmen 17 in Wirkverbindung bringbar. Die Wirkverbindung wird durch die Exzentrizität E zwangsläufig erreicht. Der Zeitpunkt, wann die Wirkverbindung besteht, hängt entscheidend vom Phasenwinkel ab. Der Phasenwinkel ist der Winkel, in dem die beiden Räder 11 und 21 in Drehrichtung, also um die Drehpunkte D₁ und D₂, zueinander stehen. In der Darstellung gemäß Figur 1 ist der Phasenwinkel bzw. die Phasenverschiebung zwischen Antriebsrad 11 und Stiftrad 21 derart gewählt, dass die Wirkverbindung zwischen Stift 22 einerseits und Zahnarm 17 andererseits im Einlaufbereich I besteht. Das bedeutet, dass jeder Zahn 13, unmittelbar bevor die Förderkette 19 auf das Kettenrad 10 läuft, entgegen der Haupttransportrichtung F ausgelenkt wird. Genauer erfolgt ein Zurückhalten, indem die Zahnarme 17 an der entsprechenden Position entsprechend der Exzentrizität - und der Förderkette 19 quasi entgegenkommend - über einen definierten Winkelbereich aufgehalten bzw. zurück gehalten werden, so dass der Zahn 13 in eine Position gebracht wird, in der er das korrespondierende Kettenglied 20 der Förderkette 19 im Zahngrund 14 aufnehmen kann. Die gezeigte Variante sieht eine Vorauslenkung beim Einlauf der Förderkette 19 vor, um ein Auflaufen der Förderkette 19 auf die Zähne 13 mit anschließendem Zahnübersprung zu verhindern. Bei Problemen am Auslauf der Förderkette 19 ist auch eine Vorauslenkung im Auslaufbereich II möglich, um beispielsweise ein Einhaken der Förderkette 19 zu verhindern. Bei entsprechender Anordnung und Ausbildung kann die Zwangsauslenkung aber auch sowohl im Einlaufbereich I als auch im Auslaufbereich II vorgesehen sein.

Das Stiftrad 21 ist mit gleicher Drehzahl angetrieben wie das Antriebsrad 11. Grundsätzlich ist die Drehzahl für beide Räder 11, 21 in stationärem Betrieb konstant. Der Antrieb kann über separate (nicht dargestellte) Antriebe erfolgen. Es ist insbesondere bei elektrischen Einzelantrieben möglich, dass das Stiftrad 21 einer ungleichförmigen Drehbewegung, nämlich verschiedenen Winkelgeschwindigkeiten während einer Umdrehung, unterworfen wird, wobei die mittlere Winkelgeschwindigkeit der Geschwindigkeit des Antriebsrades 11 entspricht. Des weiteren ermöglichen die elektrischen Einzelantriebe eine gezielte Phasenverschiebung in Abhängigkeit einer zuvor mittels geeigneter und üblicher Sensorik automatisch ermittelten Kettenteilung, wodurch der Ausgleich auch in Beschleunigungs- und Bremsphasen der Förderkette 19 sichergestellt ist.

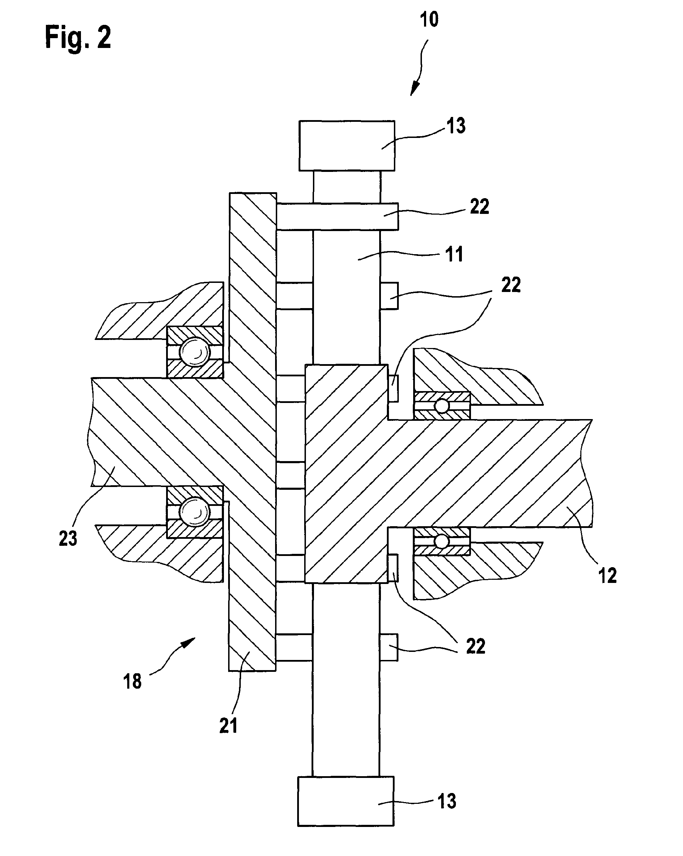

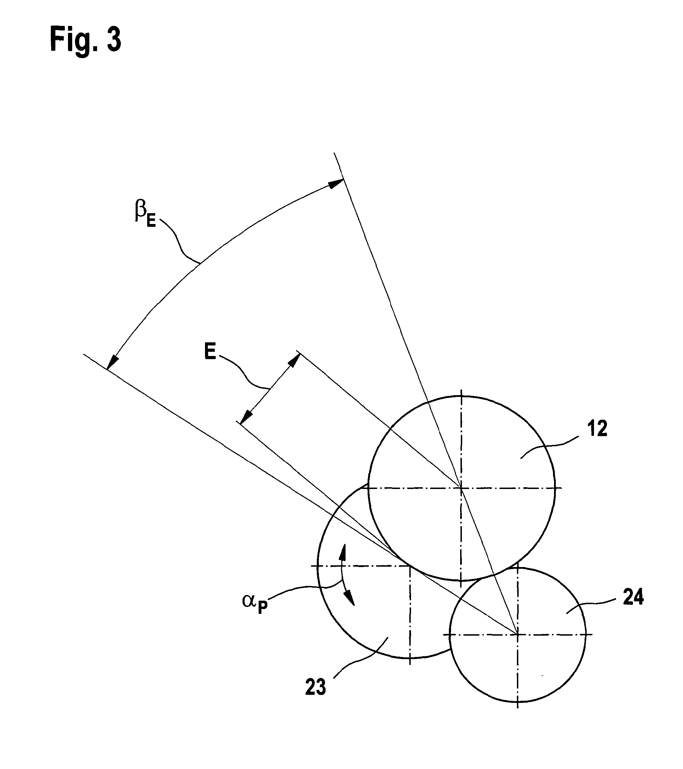

Eine weitere Möglichkeit, eine konstante Geschwindigkeit von Stiftrad 21 und Antriebsrad 11 zu erzielen, besteht in der mechanischen Kopplung von Antriebsrad 11 und Stiftrad 21. In der Ausführungsform gemäß Figur 2 ist ein getrennter Antrieb vorgesehen. Aus der schematischen Figur 3 ergibt sich eine mechanische Kopplung mittels eines Getriebes. Alternativ kann z.B. auch ein innenverzahntes Hohlrad zur mechanischen Kopplung eingesetzt werden.

Die Verstellung von Phasenverschiebung P einerseits und Exzentrizität E andererseits kann auf unterschiedliche Weise erfolgen. Für den Fall, dass unabhängige Antriebe für die beiden Räder 11, 21 verwendet werden, kann die Phasenverschiebung P über eine entsprechende elektronische Motorregelung vorgenommen werden. Die Exzentrizität E ist mechanisch beispielsweise über eine Achsverlagerung der Achsen von Antriebsrad 11 und Stiftrad 21 realisierbar. Bei der mechanischen Kopplung wird die Exzentrizität E ebenfalls in der gerade beschriebenen Weise verstellt. Für die Phasenverschiebung P sind jedoch zusätzliche Elemente, wie z.B. eine Klemmkupplung, für eine mechanische Verdrehfähigkeit des Stiftrades 21 relativ zum Antriebsrad 11 vorgesehen.

In der Figur 3 ist beispielhaft eine mechanische Kopplung schematisch dargestellt. Die Antriebswelle 12 für das Antriebsrad 11 und eine Antriebswelle 23 für das Stiftrad 21 sind über eine Zwischenwelle 24 in Wirkverbindung zueinander. Die beiden Räder 11, 21 bzw. Wellen 12 und 23 sind versetzt zueinander mit der Exzentrizität E angeordnet. Mit dem Winkel β_{E} ist der Einstellwinkel für die Exzentrizität E bezeichnet. Der Winkel α_{P} bezeichnet die Phasenverschiebung zwischen den Wellen 12 und 23, die von der Einstellung der Exzentrizität E beeinflusst wird. Durch Verändern des Winkels α_{P} werden der Zeitpunkt und damit auch die Position der Wirkverbindung zwischen Stift 22 und Zahnarm 17 eingestellt. Die Einstellung des Winkels α_{P} kann, beispielsweise mittels Verwendung einer nicht dargestellten Klemmkupplung, durch Verdrehen der Welle 23 relativ zur Zwischenwelle 24 vorgenommen werden.

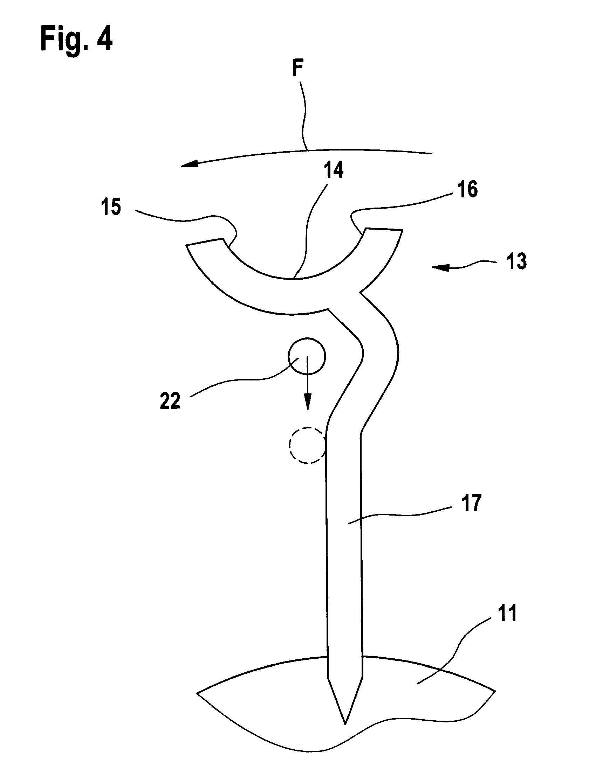

Aus den Figuren 4 bis 6 gehen unterschiedliche Formen von Zähnen 13 bzw. Zahnarmen 17 hervor. Die gezeigten Varianten dienen zur Reduzierung des Gleitverschleißes wischen dem Stift 22 des Stiftrades 21 und dem elastischen Zahnarm 17. In der Figur 4 ist der Zahnarm 17 gekröpft ausgebildet. Mit dieser Kröpfung wird erreicht, dass der Kontaktbereich zwischen dem Stift 22 und dem Zahnarm 17 reduziert ist. Andere Formgebungen der Kröpfung mit vergleichbarem Effekt sind ebenfalls möglich.

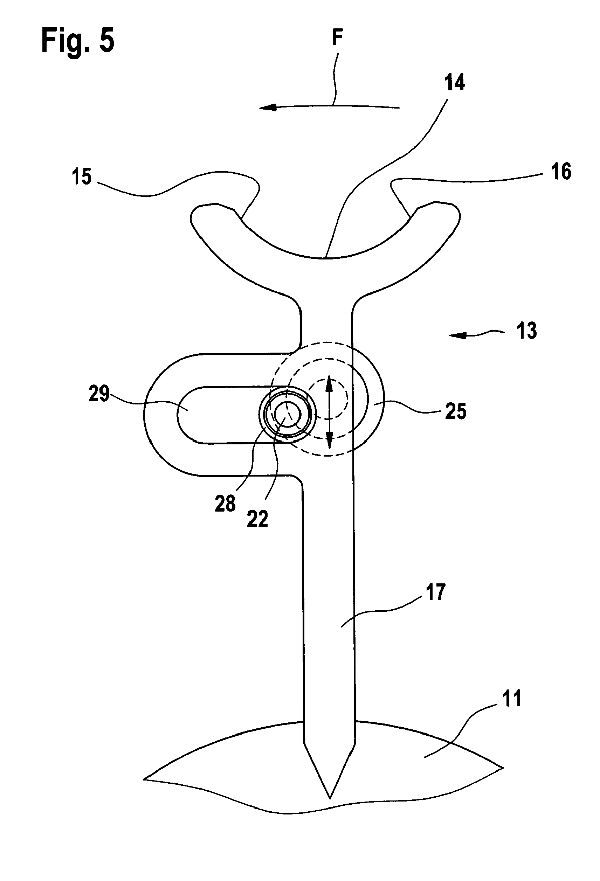

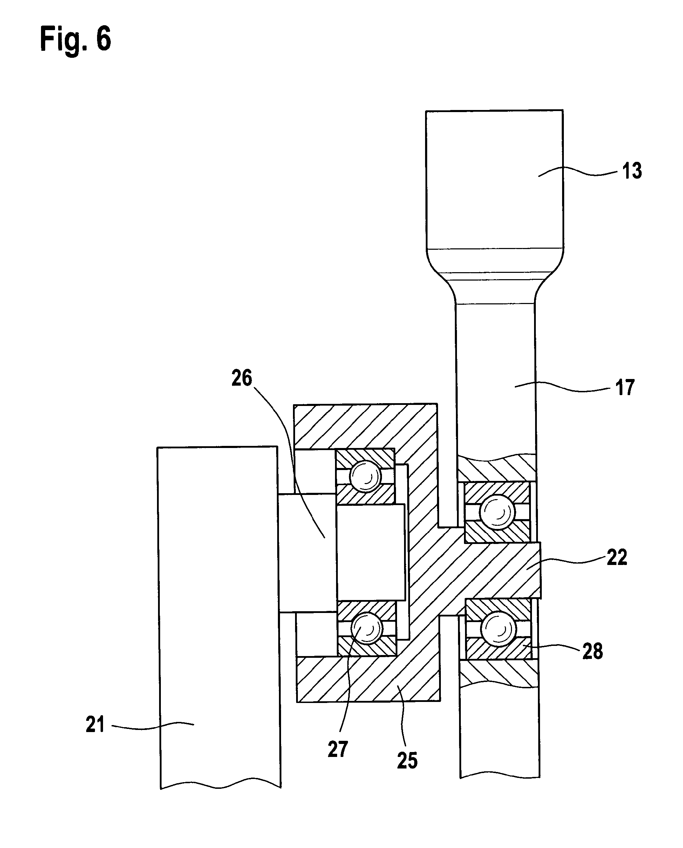

Die Ausführungsform gemäß Figur 5 zeigt eine weitere Variante zur Reduzierung der Gleitreibung zwischen Stift 22 und Zahnarm 17. Verdeutlicht wird dies insbesondere durch die Darstellung gemäß Figur 6. Jeder Stift 22 ist einer Stiftaufnahme 25 zugeordnet, wobei die Stiftaufnahme 25 als Schale oder dergleichen ausgebildet sein kann. Der Stift 22 ist exzentrisch zur Stiftaufnahme 25 angeordnet und üblicherweise fest mit dieser verbunden. Die Stiftaufnahme 25 ist ihrerseits drehbar auf einem Zapfen 26 gelagert. Dies kann mittels eines Kugellagers 27 oder in anderer üblicher Weise erfolgen. Der Zapfen 26 selbst ist in der Ausführungsform fest mit dem Stiftrad 21 verbunden, kann jedoch ebenfalls variabel positionierbar ausgebildet sein. Der Stift 22 ist im Bereich des Zahnarms 17 gelagert. Hierzu weist jeder Zahnarm 17 eine Ausnehmung 29 auf, die wie ein längliches Auge ausgebildet ist. Innerhalb des Auges ist der Stift 22 bewegbar gelagert, beispielsweise durch ein Gleitlager 28, eine Hülse oder dergleichen. Innerhalb der Ausnehmung 29 ist der Stift 22 jeweils zwangsgeführt.

## Patentansprüche

1. Kettenrad, insbesondere zum Umlenken und/oder Antreiben einer Förderkette (19), umfassend ein rotierend antreibbares Antriebsrad (11), an dessen Umfang mehrere Zähne (13) gleichmäßig über den Umfang unter Bildung einer Zahnteilung verteilt angeordnet sind, wobei die Zähne (13) in Umfangsrichtung relativ zum Antriebsrad (11) bewegbar ausgebildet sind, **dadurch gekennzeichnet, dass** den Zähnen (13) ein Element (18) zum aktiven Auslenken in Umfangsrichtung zugeordnet ist.

2. Kettenrad nach Anspruch 1, **dadurch gekennzeichnet, dass** das Element (18) zur Zwangsauslenkung der Zähne (13) mindestens im Einlaufbereich I der Förderkette (19), vorzugsweise jedoch im Einlaufbereich I und Auslaufbereich II der Förderkette (19) ausgebildet ist.

3. Kettenrad nach Anspruch 1 oder 2, **dadurch gekennzeichnet, dass** das Element (18) ein Stiftrad (21) ist, das exzentrisch zum Antriebsrad (11) angeordnet ist.

4. Ketterad nach Anspruch 3, **dadurch gekennzeichnet, dass** das Stiftrad (21) einen größeren Durchmesser aufweist als das Antriebsrad (11).

5. Kettenrad nach Anspruch 3 oder 4, **dadurch gekennzeichnet, dass** die Exzentrizität E und die Phasenverschiebung P zwischen Stiftrad (21) und Antriebsrad (11) einstellbar sind.

6. Kettenrad nach einem der Ansprüche 3 bis 5, **dadurch gekennzeichnet, dass** das Antriebsrad (11) und das Stiftrad (21) mit gleicher Drehzahl angetrieben sind.

7. Kettenrad nach einem der Ansprüche 3 bis 6, **dadurch gekennzeichnet, dass** das Antriebsrad (11) und das Stiftrad (21) während einer Umdrehung mit mindestens zeitweise unterschiedlichen Winkelgeschwindigkeiten umlaufen.

8. Kettenrad nach einem der Ansprüche 3 bis 7, **dadurch gekennzeichnet, dass** das Antriebsrad (11) und das Stiftrad (21) mechanisch gekoppelt sind.

9. Kettenrad nach einem der Ansprüche 3 bis 8, **dadurch gekennzeichnet, dass** dem Stiftrad (21) Stifte (22) zur Auslenkung der Zähne (13) zugeordnet sind, wobei die Anzahl der Stifte (22) der Anzahl der Zähne (13) entspricht.

10. Kettenrad nach Anspruch 9, **dadurch gekennzeichnet, dass** die Stifte (22) auf einem Radius des Stiftrades (21) angeordnet sind, der größer als der äußere Radius des Antriebsrades (11) ist.

11. Kettenrad nach Anspruch 9 oder 10, **dadurch gekennzeichnet, dass** die Stifte (22) wahlweise drehbar am Stiftrad (21) angeordnet oder jeweils mit einer drehbaren Hülse oder dergleichen versehen sind.

12. Kettenrad nach einem der Ansprüche 9 bis 11, **dadurch gekennzeichnet, dass** jeder Stift (22) exzentrisch an einer Stiftaufnahme (25) angeordnet ist, wobei jede Stiftaufnahme (25) auf einem am Stiftrad (21) befestigten Zapfen (26) drehbar gelagert ist.

13. Kettenrad nach einem der Ansprüche 1 bis 12, **dadurch gekennzeichnet, dass** die Zähne (13) über Zahnarme (17) am Antriebsrad (11) befestigt sind.

14. Kettenrad nach Anspruch 13, **dadurch gekennzeichnet, dass** die Stifte (22) einerseits und die Zahnarme (17) andererseits insbesondere im Einlaufbereich I der Förderkette (19) in Wirkverbindung zueinander bringbar sind.

15. Kettenrad nach Anspruch 13 oder 14, **dadurch gekennzeichnet, dass** jeder Zahnarm (17) eine Ausnehmung (29) zur Aufnahme eines Stiftes (22) aufweist.

16. Kettenrad nach Anspruch 13 oder 14, **dadurch gekennzeichnet, dass** die Zahnarme (17) gekröpft ausgebildet sind.

17. Kettenrad nach einem der Ansprüche 13 bis 16, **dadurch gekennzeichnet, dass** die Zähne (13) bzw. die Zahnarme (17) biegeelastisch ausgebildet sind.

18. Kettenrad nach einem der Ansprüche 13 bis 17, **dadurch gekennzeichnet, dass** die Zahnarme (17) gelenkig am Antriebsrad (11) angeordnet sind.

19. Kettenrad nach Anspruch 18, **dadurch gekennzeichnet, dass** die Zahnarme (17) durch mindestens ein Federelement vorgespannt sind.
